# EUROPEAN PATENT APPLICATION

(11) **EP 4 497 880 A1**
(43) Date of publication of application: **29.01.2025**
(21) Application number: 23807449.6
(22) Date of filing: 02.05.2023
(51) Int. Cl.: E02F 9/24, E02F 9/26, G08B 21/02, H04N 7/18

(54) **WORK MACHINE SAFETY DEVICE**

(30) Priority: 19.05.2022 JP 2022082015
(71) Applicant: KOBELCO CONSTRUCTION MACHINERY CO., LTD., Hiroshima-shi, Hiroshima 731-5161 (JP)
(72) Inventor: KOJIMA, Yuki, Hiroshima-shi, Hiroshima 731-5161 (JP)
(74) Representative: TBK
(86) International application number: PCT/JP2023/017139
(87) International publication number: WO 2023/223842

(57) **Abstract**

Provided is a safety device capable of outputting an alarm at a preferred frequency based on the presence/absence of a detection object around a work machine. The safety device comprises a detection part, an alarm device, an operation detector and a control part. The detection part detects the detection objects present around the work machine. The alarm device outputs an alarm. The operation detector detects a target operation amount, which is the magnitude of an alarm target operation. The control part makes the alarm device output an operation alarm only when a detection object is present in an alarm area set around the work machine and the target operation amount exceeds a preset allowable operation amount, and stops the output of the operation alarm regardless of the presence/absence of the detection object when the target operation amount is equal to or less than the allowable operation amount.

## Description

### Technical Field

The present invention relates to a safety device for a work machine.

### Background Art

There is conventionally known a device that detects a detection object present around a work machine such as a hydraulic excavator and issues an alarm. For example, Patent Literature 1 discloses a device that detects the presence or absence of a person within a predetermined area around a work machine and controls an alarm for an operator based on the detection result. This device has a function of judging whether or not the work machine is in a work available state (specifically, whether or not the gate lock lever is in an unlock state), and the device is configured to start an alarm at a point in time when the work machine is judged to come into the work available state in a situation where the work machine is judged not to be in the work available state and it is judged that a person is present in the predetermined area.

According to the device described in Patent Literature 1, an alarm is always output the alarm when the work machine is in the work available state regardless of no performance of an operation for the work machine, thus increasing the frequency of the alarm high. This renders an operator insensible to the alarm, thereby reducing the alert effect provided by the alarm.

### Citation List

### Patent Literature

Patent Literature 1: Japanese Unexamined Patent Publication No. 2014-181509

### Summary of Invention

It is an object of the present invention to provide a safety device capable of issuing an alarm at a suitable frequency based on the presence or absence of a detection target around a work machine.

Provided is a safety device for a work machine, comprising a detection part, an alarm device, an operation detector, and a control part. The work machine includes an operation device, which allows an operation for moving the work machine to be applied to the operation device, the operation including an alarm target operation. The detection part detects a detection object present around the work machine. The alarm device is capable of outputting an alarm. The operation detector detects a target operation amount that is a magnitude of the alarm target operation. The control part is configured to make the alarm device output an operation alarm only when the detection object detected by the detection part is present in an alarm area that is set around the work machine and the target operation amount exceeds a preset allowable operation amount, and configured to make outputting the operation alarm stopped regardless of a presence or absence of the detection object when the target operation amount is equal to or less than the allowable operation amount.

### Brief Description of Drawings

FIG. 1 is a side view showing a hydraulic excavator, which is an example of a work machine according to an embodiment of the present invention.
FIG. 2 is a plan view showing the hydraulic excavator and an alarm area set therearound.
FIG. 3 is a block diagram showing a hydraulic circuit and a controller, which are installed on the hydraulic excavator.
FIG. 4 is a block diagram showing main functions of the controller.
FIG. 5 is a flowchart showing the main routine of a speed limitation control executed by the controller.
FIG. 6 is a flowchart showing a flow of an alarm control that is a subroutine of the sub routine of the safety control and included in the safety control.
FIG. 7 is a flowchart showing a flow of a motion limitation control that is a subroutine of the sub routine of the safety control and included in the safety control.
FIG. 8 is a graph showing an example of a characteristic of a pilot pressure to an actual operation amount applied to the operation device.

### Detailed Description

Preferred embodiments of the present invention will be described with reference to the drawings.

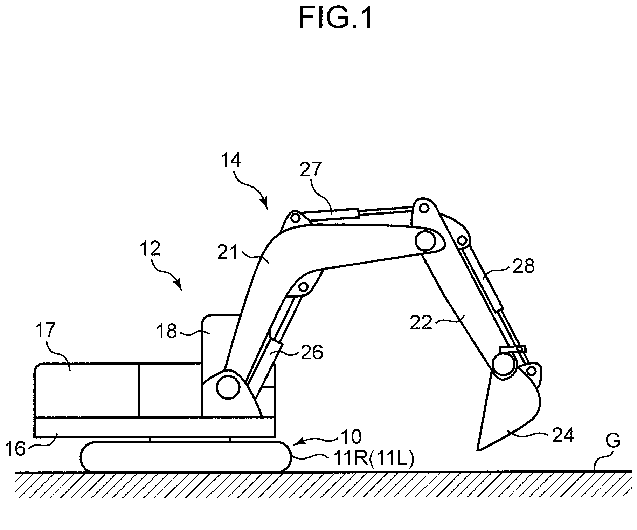

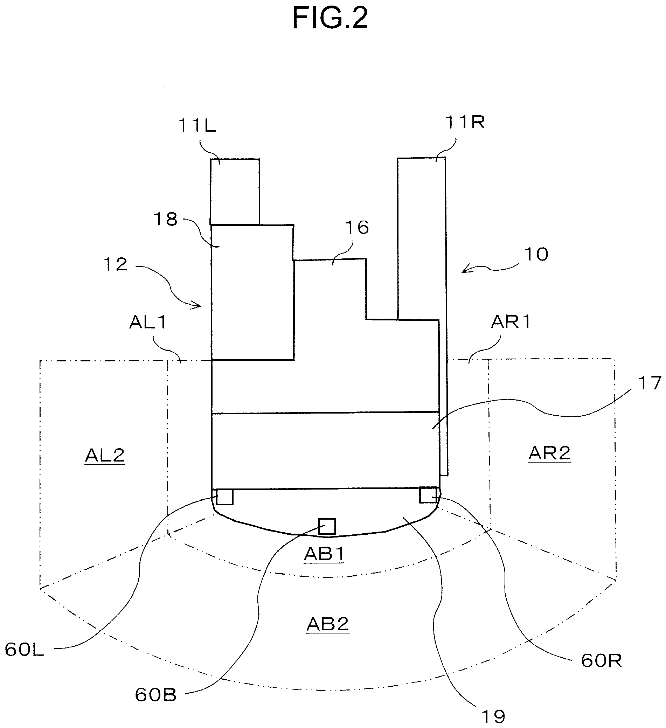

FIGS. 1 and 2 show a hydraulic excavator, which is a work machine on which a control device according to an embodiment of the present invention is installed. The hydraulic excavator includes a lower traveling body 10 capable of traveling on the ground G, an upper turning body 12 mounted on the lower traveling body 10, a work device 14 mounted on the upper turning body 12, and a work driving device.

The lower traveling body 10 includes a pair of right crawler 11R and a left crawler 11L disposed on the right and left sides, respectively. Each of the right and left crawlers 11R and 11L operates to make the lower traveling body 10 travel on the ground G.

The upper turning body 12 includes a turning frame 16 and a plurality of elements mounted thereon. The plurality of elements include an engine room 17 that accommodates an engine, a cab 18 that is an operation room, and a counterweight 19 that forms a rear end of the upper turning body 12.

The work device 14 includes a boom 21, an arm 22, and a bucket 24. The boom 21 is supported on the front end of the turning frame 16 capably of rising and falling. The arm 22 is coupled to the tip of the boom 21 capably of vertically rotational movement with respect to the boom 21. The bucket 24, which is a tip attachment for performing excavation work or the like, is attached to a tip of the arm 22 capably of vertically rotational movement with respect to the arm 22.

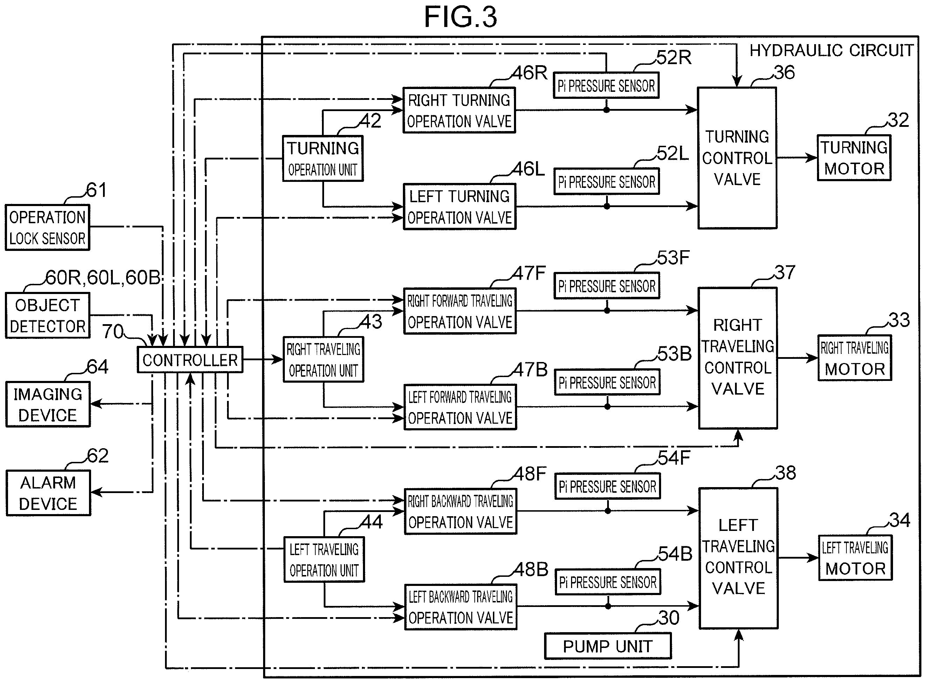

FIG. 3 shows a hydraulic circuit installed on the hydraulic excavator, a plurality of object detectors, an operation lock sensor 61, an alarm device 62, a display device 64, and a controller 70. The controller 70, which is composed of, for example, a microcomputer, controls the action of each element included in the hydraulic circuit. On the other hand, the controller 70 is electrically connected to the plurality of object detectors, the alarm unit 62, and the display device 64, to constitute a safety device in association therewith.

The hydraulic circuit includes a pump unit 30, a plurality of hydraulic actuators, a plurality of control valves, an operation device, a plurality of operation valves, and a plurality of pilot pressure sensors.

The pump unit 30 includes a plurality of hydraulic pumps, which include at least one main pump and a pilot pump. The plurality of hydraulic pumps are connected to a not-illustrated engine, which is a drive source, and driven by power output by the engine to discharge hydraulic fluid.

The plurality of hydraulic actuators are configured to actuate respective movable parts of the hydraulic excavator by the supply of hydraulic fluid from the pump unit 30, including a plurality of working hydraulic cylinders, a turning motor 32, a right traveling motor 33, and a left traveling motor 34.

The plurality of working hydraulic cylinders include a boom cylinder 26, an arm cylinder 27, and a bucket cylinder 28, which are shown in FIG. 1. The boom cylinder 26 is expanded and contracted by the supply of hydraulic fluid thereto so as to raise and lower the boom 21 with respect to the upper turning body 12. The arm cylinder 27 is expanded and contracted by the supply of hydraulic fluid thereto so as to rotationally move the arm 22 with respect to the boom 21. The bucket cylinder 28 is expanded and contracted by the supply of the hydraulic fluid thereto so as to rotationally move the bucket 24 with respect to the arm 22.

The turning motor 32, which includes a pair of rightward turning port and a leftward turning port, is operated by the supply of hydraulic fluid to one port of the rightward turning port and the leftward turning port so as to turn the upper turning body 12 in a direction corresponding to the one port, namely, a rightward turning direction or a leftward turning direction.

The right traveling motor 33, which includes a pair of right forward port and a right backward port, is operated by the supply of hydraulic fluid to one port of the right forward and backward ports so as to actuate the right crawler 11R in a direction corresponding to the one port, namely, a forward traveling direction or a backward traveling direction. Similarly, the left traveling motor 34, which includes a pair of left forward port and a left backward port, is operated by the supply of hydraulic fluid to one port of the left forward and backward ports to actuate the left crawler 11L in a direction corresponding to the one port, namely, a forward traveling direction or a backward traveling direction.

The plurality of control valves are valves that make respective open and close motions so as to enable respective movements of the plurality of hydraulic actuators to be controlled. The plurality of control valves include a turning control valve 36, a right traveling control valve 37 and a left traveling control valve 38, which are shown in FIG. 3.

The turning control valve 36 is interposed between the pump unit 30 and the turning motor 32 and configured to make open and close motions so as to change the direction and flow rate (turning flow rate) of the hydraulic fluid supplied from the pump unit 30 to the turning motor 32. The turning control valve 36 is composed of a pilot-operated direction selector valve including a rightward turning pilot port and a leftward turning pilot port, configured to be opened by the input of the pilot pressure to the rightward turning pilot port so as to allow hydraulic fluid to be supplied to the rightward turning port of the turning motor 32 at a flow rate (rightward turning flow rate) corresponding to the magnitude of the pilot pressure, and configured to be opened by the input of the pilot pressure to the leftward turning pilot port so as to allow hydraulic fluid to be supplied to the leftward turning port of the turning motor 32 at a flow rate (leftward turning flow rate) corresponding to the magnitude of the pilot pressure.

The right traveling control valve 37 is interposed between the pump unit 30 and the right traveling motor 33 and configured to make open and close motions so as to change the direction and flow rate (right traveling flow rate) of the hydraulic fluid supplied from the pump unit 30 to the right traveling motor 33. The right traveling control valve 37 is composed of a pilot-operated direction selector valve including a right forward pilot port and a right backward pilot port, configured to be opened by the input of the pilot pressure to the right forward pilot port so as to allow hydraulic fluid to be supplied to the right forward port of the right traveling motor 33 at a flow rate (right forward flow rate) corresponding to the magnitude of the pilot pressure, and configured to be opened by the input of the pilot pressure to the right backward pilot port so as to allow hydraulic fluid to be supplied to the right backward port of the right traveling motor 33 at a flow rate (right backward flow rate) corresponding to the magnitude of the pilot pressure.

The left traveling control valve 38 is interposed between the pump unit 30 and the left traveling motor 34 and configured to make open and close motions so as to change the direction and flow rate (left traveling flow rate) of the hydraulic fluid supplied from the pump unit 30 to the left traveling motor 34. The left traveling control valve 38 is composed of a pilot-operated direction selector valve including a left forward pilot port and a left backward pilot port, configured to be opened by the input of the pilot pressure to the left forward pilot port so as to allow hydraulic fluid to be supplied to the left forward port of the left traveling motor 34 at a flow rate (left forward flow rate) corresponding to the magnitude of the pilot pressure, and configured to be opened by the input of the pilot pressure to the left backward pilot port so as to allow hydraulic fluid to be supplied to the left backward port of the left traveling motor 34 at a flow rate (left backward flow rate) corresponding to the magnitude of the pilot pressure.

The plurality of control valves further include a boom control valve, an arm control valve and a bucket control valve, which are provided for the boom cylinder 26, the arm cylinder 27 and the bucket cylinder 28, respectively.

The operation device is configured to allow an operation for moving the hydraulic excavator to be applied to the operation device and input an operation signal to the controller 70. The operation device includes a plurality of operation units corresponding to the plurality of control valves, respectively. Each of the operation units is composed of a so-called remote-control valve connected to the pilot pump, configured to be opened so as to allow a pilot pressure corresponding to the operation applied to the remote-control valve to be applied to the corresponding control valve.

The operations to be applied to the operation device include a plurality of alarm target operations which will be specifically described below. In the present embodiment, the plurality of alarm target operations include a turning operation for turning the upper turning body 12 with respect to the lower traveling body 10, and a right traveling operation and a left traveling operation for moving the right and left crawlers 11R and 11L, respectively, each of the right traveling operation and the left traveling operation corresponding to a traveling operation for making the lower traveling body 10 perform a traveling motion.

FIG. 3 shows a turning operation unit 42, a right traveling operation unit 43 and a left traveling operation unit 44, each being an operation unit to which the alarm target operation is applied, each included in the plurality of operation units.

The turning operation unit 42 includes a turning lever and a turning pilot valve connected to the turning lever. The turning pilot valve is opened so as to let a pilot pressure having a magnitude corresponding to the magnitude of the turning operation be supplied to the pilot port corresponding to the direction of the turning operation applied to the turning lever, the pilot port selected from the rightward turning port and the leftward turning pilot port of the turning control valve 36. The right traveling operation unit 43 includes a right traveling lever and a right traveling pilot valve connected to the right traveling lever. The right traveling pilot valve is opened so as to let a pilot pressure having a magnitude corresponding to the magnitude of the right traveling operation be supplied to the pilot port corresponding to the direction of the right traveling operation applied to the right traveling lever, the pilot port selected from the right forward and left forward pilot ports of the right traveling control valve 37. Similarly, the left traveling operation unit 44 includes a left traveling lever and a left traveling pilot valve connected to the left traveling lever, configured to be opened so as to let a pilot pressure having a magnitude corresponding to the magnitude of the left traveling operation be supplied to the pilot port corresponding to the direction of the left traveling operation applied to the left traveling lever, the pilot port selected from the left forward and the left forward pilot ports of the left traveling control valve 38.

In addition to the turning operation unit 42, the right traveling and the left traveling operation units 43, 44, the plurality of operation units include a boom operation unit, an arm operation unit, and a bucket operation unit. The boom operation unit allows a boom operation for moving the boom 21 to be applied to the boom operation unit to allow a pilot pressure to be supplied to the boom control valve. The arm operation unit allows an arm operation for moving the arm 22 to be applied to the arm operation unit to allow a pilot pressure to be supplied to the arm control valve. The bucket operation device allows a bucket operation for moving the bucket 24 to be applied to the bucket operation device to allow a pilot pressure to be supplied to the bucket control valve. The boom operation, the arm operation and the bucket operation, although each being an operation for moving the work device 14, are excluded from the alarm target operation in the present embodiment.

The plurality of operation valves are interposed between the operation units that are included in the plurality of operation units and correspond to the alarm target operations, respectively, namely, the turning operation unit 42, the right traveling operation unit 43 and the left traveling operation unit 44, and respective control valves corresponding to the operating units, namely, the turning control valve 36, the right traveling control valve 37 and the left traveling control valve 38, respectively, enabling the turning pilot pressure and the right and left traveling pilot pressures to be limited by the controller 70. Specifically, each of the operation valves is composed of an electromagnetic pressure reducing valve, which performs the limitation of the pilot pressure, i.e., the limitation of the speed of the motion corresponding to the pilot pressure, at a degree corresponding to the value of an instruction current, which is a limitation command to be input to the pressure reducing valve. Each of the pressure reducing valves according to the present embodiment is a solenoid inversely proportional pressure reducing valve, configured to limit the pilot pressure at a degree increased with an increase in the limitation command. The pressure reducing valve, however, may also be a solenoid proportional pressure reducing valve.

Specifically, the plurality of operation valves include a pair of a rightward turning operation valve 46R and a leftward turning operation valve 46L, a pair of a right forward traveling operation valve 47F and a right backward traveling operation valve 47B, and a pair of a left forward traveling operation valve 48F and a left backward traveling operation valve 48B, which are shown in FIG. 3.

The rightward turning operation valve 46R is interposed between the turning operation unit 42 and the rightward turning pilot port of the turning control valve 36, and operated to limit the rightward turning pilot pressure to be input from the turning operation unit 42 to the rightward turning pilot port at a degree corresponding to a rightward turning limitation command input from the controller 70 to the rightward turning operation valve 46R. Similarly, the leftward turning operation valve 46L is interposed between the turning operation unit 42 and the leftward turning pilot port of the turning control valve 36, and operated to limit the leftward turning pilot pressure input from the turning operation unit 42 to the leftward turning pilot port at a degree corresponding to a leftward turning limitation command input to the leftward turning operation valve 46L from the controller 70.

The right forward traveling operation valve 47F is interposed between the right traveling operation unit 43 and the right forward pilot port of the right traveling control valve 37, and operated to limit the right forward pilot pressure input from the right traveling operation unit 43 to the right forward pilot port at a degree corresponding to a right forward traveling limitation command input from the controller 70 to the right forward traveling operation valve 47F. Similarly, the right backward traveling operation valve 47R is interposed between the right traveling operation unit 43 and the right backward pilot port of the right traveling control valve 37, and operated to limit the right backward pilot pressure input from the right traveling operation unit 43 to the right backward traveling pilot port at a degree corresponding to a right backward traveling limitation command input from the controller 70 to the right backward traveling operation valve 47R.

The left forward traveling operation valve 48F is interposed between the left traveling operation unit 44 and the left forward pilot port of the left traveling control valve 38, and operated to limit the left forward pilot pressure input from the left traveling operation unit 44 to the left forward pilot port at a degree corresponding to a left forward traveling limitation command input from the controller 70 to the left forward traveling operation valve 48F. Similarly, the left backward traveling operation valve 48R is interposed between the left traveling operation unit 44 and the left backward pilot port of the left traveling control valve 38, and operated to limit a left backward pilot pressure input from the left traveling operation unit 44 to the left backward pilot port at a degree corresponding to a left backward traveling limitation command input from the controller 70 to the left backward traveling operation valve 48R.

The plurality of pilot pressure sensors are operation amount detectors that detect respective magnitudes (operation amounts) of the turning operation, the right traveling operation and the left traveling operation. Specifically, the plurality of pilot pressure sensors, each composed of a pressure sensor, detect respective pilot pressures input to the turning control valve 36, the right traveling control valve 37, and the left traveling control valve 38 and input respective detection signals corresponding to respective magnitudes of the pilot pressures, i.e., respective detection signals corresponding to the target operation amounts, to the controller 70. Specifically, the plurality of pilot pressure sensors include a rightward turning pilot pressure sensor 52R that detects the rightward turning pilot pressure, a leftward turning pilot pressure sensor 52L that detects the leftward turning pilot pressure sensor, a right forward pilot pressure sensor 53F that detects the right forward pilot pressure, a right backward pilot pressure sensor 53B that detects the right backward pilot pressure, a left forward pilot pressure sensor 54F that detects the left forward pilot pressure, and a left backward pilot pressure sensor 54B that detects the left backward pilot pressure.

In the hydraulic circuit, the turning motor 32, the turning control valve 36, and the rightward turning and the leftward turning operation valves 46R, 46L constitute a turning drive circuit for turning the upper turning body 12, in association with the pump unit 30. Similarly, the right traveling motor 33, the right traveling control valve 37, and the right forward and backward traveling operation valves 47F, 47B constitute a right traveling drive circuit for driving the right crawler 11R, in association with the pump unit 30, and the left traveling motor 34, the left traveling control valve 38, and the left forward and backward traveling operation valves 48F, 48B constitute a left traveling drive circuit for driving the left crawler 11L, in association with the pump unit 30.

The plurality of object detectors are disposed in respective specific parts of the hydraulic excavator, and configured to detect a detection object present around the hydraulic excavator, to generate detection signals to allow position information about the detection object to be acquired and to input the generated detection signals to the controller 70. The position information includes an object distance, which is a distance from the specific part to the detection object. Each of the object detectors in the present embodiment is composed of an imaging device such as a monocular camera or a stereo camera, generating a captured image containing the detection object.

Specifically, the plurality of object detectors according to the embodiment are disposed in the upper turning body 12, including a right object detector 60R, a left object detector 60L and a back object detector 60B, which are shown in FIG. 2. The right object detector 60R is disposed on a right side portion of the upper turning body 12 so as to be able to detect at least a detection object lying rightward of the upper turning body 12. The left object detector 60L is disposed on a left side portion of the upper turning body 12 so as to be able to at least a detection object lying leftward of the upper turning body 12. The back object detector 60B is disposed at a back end portion of the upper turning body 12 so as to be able to detect at least a detection object lying backward of the upper turning body 12.

The operation lock sensor 61 detects whether the operation lock lever is at an operation lock position or an operation lock release position. The operation lock lever is provided in the cab 18, being switchable between the operation lock position, for example, a position for open an entrance, and the operation lock release position, for example, a position for closing the entrance. When the operation lock lever is at the operation lock position, the controller 70 makes a not-illustrated operation lock valve provided between the pilot pump and the operation device, namely, the plurality of operation units, closed to hinder a pilot pressure from being output from the operation device, thereby forming an operation lock state where each operation to be applied to the operation device is invalidated. On the other hand, when the operation lock lever is at the operation lock release position, the controller 70 makes the operation lock valve opened to allow a pilot pressure to be output from the operation device, thereby forming an operation lock release state where each operation is validated.

The alarm device 62 outputs an alarm upon the input of an alarm command from the controller 70 to the alarm unit 62. The alarm device 62 may be either one configured to alarm through a sound, such as a buzzer, or one configured to alarm through light, such as a warning lamp. The alarm device 62 according to the present embodiment includes an internal alarm 62A and an external alarm 62B. The internal alarm 62A is provided inside the cab 18, being capable of outputting an alarm toward the inside, that is, toward an operator in the cab 18. The external alarm 62B is provided outside the cab 18, being capable of outputting an alarm toward the outside, that is, toward a worker or the like outside the cab 18.

The display device 64 has a display screen, disposed in the cab 18 at a position to allow the display screen to be visually recognized by an operator. The display device 64 displays an image corresponding to the display command signal input from the controller 70.

The controller 70 acquires position information that is information about the presence or absence of a detection target around the hydraulic excavator and the position of the detection target, based on the image signal input from each of the object detectors 60R, 60L, 60B, and executes a safety control based on the position information.

In the present embodiment, the safety control includes a motion limitation control, an alarm control and a display control.

The motion limitation control is a control of limiting a limitation target motion selected from the motions of the hydraulic excavator based on the position information. In the present embodiment, the candidates of the limitation target motions correspond to the alarm target motions, including the turning motion of the upper turning body 12 with respect to the lower traveling body 10, and the traveling motion provided by the right crawler 11R and the left crawler 11L. The candidates may include the motion of the work device 14, for example, the rising and falling motions of the boom 21 and the rotational motion of the arm 22; in the present embodiment, however, the rising and falling motions and the rotational motion are excluded from the candidates.

The alarm control is a control of making the alarm device 62 output an alarm based on the detection of the detection object and the alarm command operation. The display control is a control of making the display device 64 display a warning image for notifying the presence of the detection target based on the detection of the detection target.

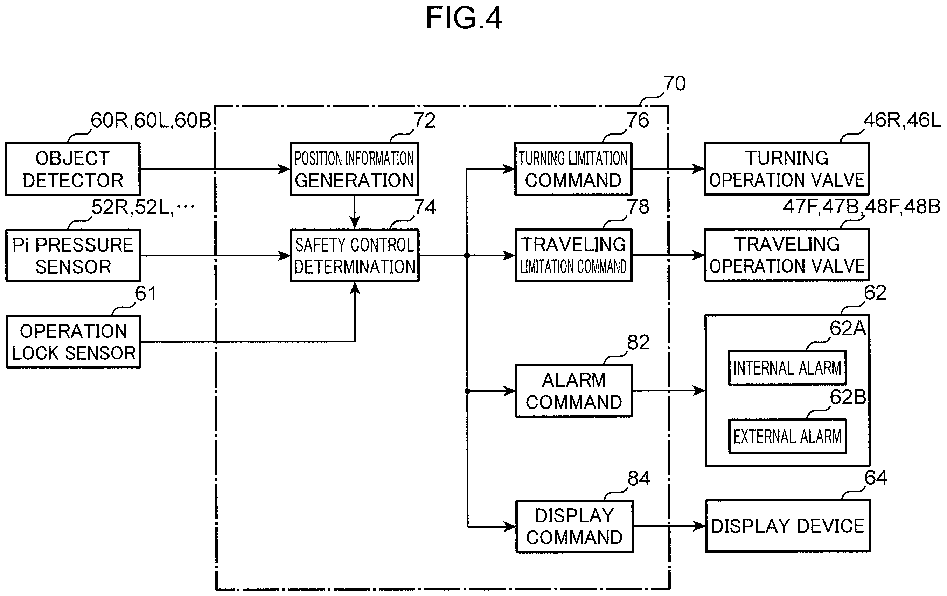

The controller 70 includes a plurality of functions as shown in FIG. 4 to execute the safety control, the plurality of functions including a position information generation part 72, a safety control determination part 74, a turning limitation command part 76, a traveling limitation command part 78, an alarm command part 82 and a display command part 84. These functions are implemented, for example, by the execution of a program prestored in a memory included in the controller 70 by a CPU included in the controller 70.

The position information generation part 72 takes in the image signal that is input from each of the object detectors 60R, 60L, 60B, periodically (specifically, every time a preset sampling period has elapsed), and processes the image signal. The position information generation part 72 thereby identifies a detection object in the imaging area of each of the object detector 60R, 60L, 60B, and the position of the detection object with respect to the upper turning body 12 if the detection object is present, and generates position information on the position of the detection object. The position information generation part 72, thus, constitutes a detection part that detects the detection target part and the position thereof, in association with the object detectors 60R, 60L, 60B. The detection object preferably includes at least a person (worker) and may include an object other than a person.

The safety control determination part 74 determines the necessity of execution of the safety control and the content of the safety control based on the position information generated by the position information generation part 72. Specifically, the safety control determination part 74 according to the embodiment stores an alarm area set around the hydraulic excavator in a reference posture shown in FIG. 2, and the alarm area is divided into a plurality of areas shown in FIG. 2, namely, a right inner area AR1, a right outer area AR2, a back inner area AB1, a back outer area AB2, a left inner area AL1, and a right inner area AL2. The reference posture is a posture with coincidence of the front-rear direction (traveling direction) of the lower traveling body 10 with the front-rear direction of the upper turning body 12. The work device 14 is supported by the upper turning body 12 so as to protrude forward beyond the upper turning body 12.

Among the plurality of areas, the right inner and the right outer areas AR1, AR2 are areas set correspondingly to the detection range of the right object detector 60R; the right inner area AR1 is set in the close vicinity of the right side surface of the upper turning body 12 and the right outer area AR2 is set immediately outside the right inner area AR1. Similarly, the back inner and back outer areas AB1, AB2 are areas set correspondingly to the detection range of the rear object detector 60B; the back inner area AB1 is set in the close vicinity of the back end surface of the upper turning body 12 and the back outer area AB2 is set immediately outside the back inner area AB1. The left inner and left outer areas AL1, AL2 are areas set correspondingly to the detection range of the left object detector 60L; the left inner area AL1 is set in the close vicinity of the back end surface of the upper turning body 12, and the left outer area AL2 is set immediately outside the left inner area AL1.

The safety control determination part 74 determines the area where the detection target is present among the plurality of areas, and determines the safety control to be executed based on the determined area and the alarm target operation, namely, in the present embodiment, the turning operation, the right traveling operation and the left traveling operation, applied to the operation device. Specifically, the safety control determination part 74 stores the relationship as shown in the following Table 1 of the combination of the area and the alarm target operation to the content of the motion limitation control corresponding thereto, and determines the motion limitation control and further the alarm control that should be executed, based on the relationship.

**[TABLE 1]**

| OPERATION | DETECTION TARGET POSITION | | | | | |
|---|---|---|---|---|---|---|
| | AR1 | AR2 | AB1 | AB2 | AL1 | AL2 |
| FORWARD TRAVELING | NO LIMITATION | NO LIMITATION | NO LIMITATION | NO LIMITATION | NO LIMITATION | NO LIMITATION |
| BACKWARD TRAVELING | NO LIMITATION | NO LIMITATION | FORCIBLE STOP | SPEED LIMITATION | NO LIMITATION | NO LIMITATION |
| RIGHTWARD TURNING | NO LIMITATION | NO LIMITATION | SPEED LIMITATION | NO LIMITATION | FORCIBLE STOP | SPEED LIMITATION |
| LEFTWARD TURNING | FORCIBLE STOP | SPEED LIMITATION | SPEED LIMITATION | NO LIMITATION | NO LIMITATION | NO LIMITATION |
| WORKING | NO LIMITATION | NO LIMITATION | NO LIMITATION | NO LIMITATION | NO LIMITATION | NO LIMITATION |

For example, when the detection object is detected in the area AB1, the safety control determination part 74 determines, as the motion limitation control to be executed, a control of forcibly stopping the backward traveling motion, limiting the speed of the rightward turning motion and the leftward turning motion, and not limiting the forward traveling motion and a working motion, which is the motion of the work device 14.

On the other hand, when the detection target is present in the stop area or the speed limitation area among the plurality of areas, the safety control determination part 74 determines, as the alarm control, a control of making the alarm device 62 output an operation alarm only when the target operation amount, which is the magnitude of at least one of the turning operation and the traveling operation, exceeds a preset allowable operation amount. In other words, when the operation amount of each of the turning operation and the traveling operation is equal to or less than the allowable operation amount, the safety control determination part 74 determines the control of stopping the output of the alarm even when the detection target is present in the alarm area. Details of the alarm control will be described later.

The turning limitation command part 76 generates a turning limitation command signal. The turning limitation command signal is a signal for limiting the turning motion of the upper turning body 12. Specifically, the turning limitation command signal is a signal for, when the control of performing the limitation of the speed of the rightward turning operation or the leftward turning operation or the forcible stop thereof is determined, limiting the speed at the limitation degree that is determined for the limitation of the speed (turning speed) or forcibly stopping. The turning limitation command part 76 inputs the turning limitation command signal to the operation valve corresponding to the motion to be limited between the rightward turning operation valve 46R and the leftward turning operation valve 46L (the rightward turning operation valve 46R when the rightward turning motion is to be limited).

The traveling limitation command part 78 generates a traveling limitation command signal. The traveling limitation command signal is a signal for limiting the traveling motion of the lower traveling body 10. Specifically the traveling limitation command signal is a signal for, when the control of performing the limitation of the speed of the forward traveling motion or the backward traveling motion or forcible stop thereof is determined, limiting the speed at the limit degree determined for the limitation of the speed (traveling speed) or forcibly stopping. The traveling limitation command part 78 inputs the traveling limitation command signal to the operation valve corresponding to the specific motion to be limited among the right forward traveling operation valve 47F, the right backward traveling operation valve 47B, the left forward traveling operation valve 48F and the left backward traveling operation valve 48B (the right backward traveling operation valve 47B and the left forward traveling operation valve 48B when the backward traveling motion is to be limited).

The alarm command part 82 generates an alarm command signal corresponding to the alarm control determined by the safety control determination part 74, and inputs the alarm command signal to the alarm device 62 to thereby make the alarm device 62 output an alarm. The timing and the content of the alarm will be described later.

The display command part 84 generates a display command signal corresponding to the display control determined by the safety control determination part 74, and inputs the display command signal to the display device 64 to thereby make the warning image displayed. The warning image is an image for notifying an operator of the presence of a detection object, being, in the present embodiment, a target display image indicating the position of the detection object. Suitably, the object display image is, for example, a bird's-eye image containing a frame enclosing an area including the detection object to emphasize the area.

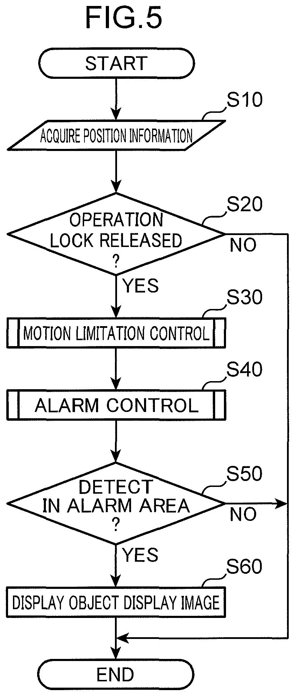

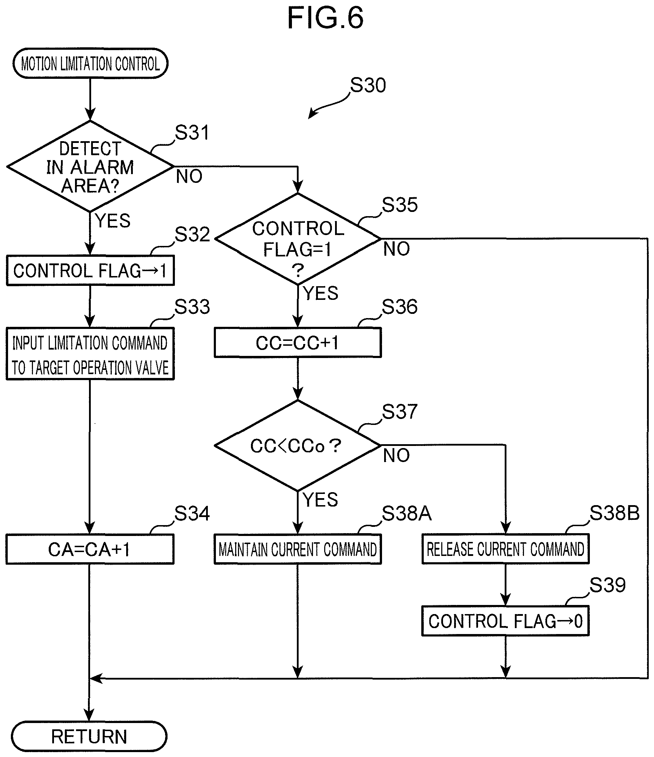

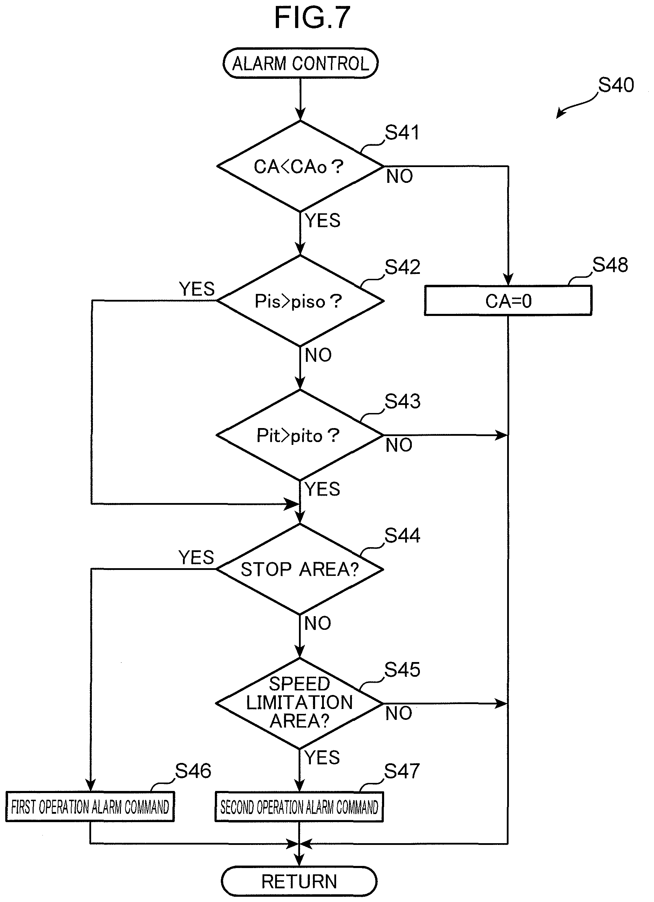

Next will be described the content of the safety control to be performed by the controller 70 more specifically with reference to respective flowcharts in FIGS. 5 to 7. FIG. 5 shows the main routine of the safety control; FIG. 6 shows the flow of a motion limitation control that is a subroutine of the safety control and included in the safety control; and FIG. 7 shows the flow of an alarm control that is a subroutine of the safety control and included in the safety control. The main routine shown in FIG. 5 is repeatedly executed every time a preset sampling period (e.g., 50 ms) elapses.

### (1) Main Routine (FIG. 5)

The position information generation part 72 of the controller 70 takes in an image signal that is input from the object detectors 60R, 60L, 60B every time the sampling period elapses and performs an image processing thereof to thereby acquire position information (step S10). Specifically, the position information generation part 72 performs the judgment on whether a detection target is present or absent in the image and the generation of information on the position of the detection object relative to the upper turning body 12 when judging the detection target to be present.

On the other hand, the safety control determination part 74 of the controller 70 judges whether or not the hydraulic excavator is in the operation lock release state, that is, whether or not each operation is valid (step S20), and, only when the hydraulic excavator is in the operation lock state (YES in step S30), the motion limitation control (step S30) shown in FIG. 6, the alarm control shown in FIG. 7 (step S40) and the display control (steps S50, S60) are executed. In the operation lock state, in which the alarm target operation is invalidated and the limitation target motion is therefore not performed even when the alarm target operation is applied to the operation device, high safety is maintained even without the execution of the safety control. Suspending the execution of the alarm control (step S40) in such a state allows the frequency of the output of the alarm to be reduced. Step S30, however, is optional. It may be therefore excluded from the condition for the execution of the safety control that the hydraulic excavator is in the operation lock release state.

In the operation lock release state (YES in step S20), the controller 70 inputs the display command signal to the display device 64, regardless of the content of the motion limitation control (step S30) and the alarm control (step S40), when a detection target is detected in the alarm area (in the present embodiment, when a detection target is present in any of the plurality of areas AR1, AR2, AB1, AB2, AL1, AL2 shown in FIG. 2; YES in step S50), and makes the screen of the display device switched to a screen displaying the object display image (step S60). This enables an operator to recognize the presence of the detection object regardless of the content of the motion limitation control (step S30) and the alarm control (step S40), specifically, whether or not the motion limitation or the alarm is actually performed.

The display of the warning image is not essential. The display device 64, alternatively, may always display a bird's-eye image of the hydraulic excavator (an image containing the detection target when the detection target is present) regardless of the presence or absence of the detection target.

### (2) Motion Limitation Control (FIG. 6)

The controller 70 judges whether or not a detection object is detected in the alarm area, that is, in the present embodiment, whether or not a detection object is present in any of the plurality of areas shown in FIG. 2 (step S31). When judging that a detection object is present in the alarm area (YES in step S31), the controller 70 changes a control flag from the initial value 0 to 1 (step S32), and inputs a limitation command to the target operation valve corresponding to the area in which the detection object is present among the plurality of operation valves (step S33). For example, in the case where a detection object lies in the area AB1 shown in FIG. 2 and table 1, the area AB1 corresponds to the stop area for the backward operation, and corresponds to the speed limitation area for the rightward turning operation and the leftward turning operation; the controller 70, therefore, inputs a stop command (a command for stopping the backward traveling motion) to the right and left traveling operation valves 47 and inputs a speed limitation command (a command for limiting respective speeds of the right and leftward turning motions) to the right and leftward turning operation valves 46R and 46L. This causes the backward traveling motion to be forcibly stopped when the backward traveling operation is performed and causes the speed of the actual rightward turning motion or the leftward turning motion to be limited to a speed lower than the speed corresponding to the operation amount of the rightward turning operation or the leftward turning operation when the rightward turning operation or the leftward turning operation is performed.

When the motion limitation control is executed, an alarm time count value CA is incremented by 1 (step S34). The alarm time count value CA, which is a value set for measuring the alarm time, is incremented every time the sampling period elapses. The alarm time is a time elapsed after the start of the motion limitation control, being the time during which the below-described alarm is output.

On the other hand, when judging that no detection target is present in the alarm area (NO in step S31), the controller 70 judges whether or not the control flag is 1, that is, whether or not the operation limitation is being executed (step S35). When the control flag is not 1, that is, when the control flag is 0 (NO in step S35), in other words, when no motion limitation control has been performed, the controller 70 does not perform the motion limitation control, that is, inputs no limitation command to any of the operation valves; however, when the control flag is 1 (YES in step S35), that is, when the motion limitation control has been already started, the controller 70 increments a control duration count value CC for measuring a control duration time by 1 (step S36), and maintains the current command until the control duration count value CC reaches a preset target count value CCo (YES in step S37, and step S38A). The control duration time is the elapsed time after the point in time when the detection of the detection object in the alarm area disappears (NO in step S31). In summary, even if the detection object becomes undetected in the alarm area (NO in step S31), the controller 70 continues the motion limitation control until a target duration time corresponding to the target count value CCo has elapsed. At the point in time when the control duration count value CC has reached the target count value CCo, that is, when the target duration has elapsed (NO in step S37), the controller 70 releases the current command to terminate the motion limitation control (step S38B), and resets the control flag to 0 (step S39).

### (3) Alarm Control (FIG. 7)

In the present embodiment, the controller 70 judges whether or not the alarm time count value CA reaches a preset target count value CAo (step S41), and executes the following alarm control only during a period in which the alarm time count value CA is less than the target count value CAo (YES in step S44), that is, a period until a target alarm time corresponding to the target count value CAo has elapsed after the start of the motion limitation control.

The controller 70 judges whether or not a premise condition for making the alarm device 62 output an operation alarm is satisfied. The premise condition is that the operation amount of at least one of the alarm target operations, namely, the turning operation and the traveling operation, (target operation amount) exceeds a preset allowable operation amount. The controller 70 according to the present embodiment makes a judgment on whether or not the turning pilot pressure Pis output from the turning operation unit 42 for the turning control valve 36 exceeds an allowable turning pilot pressure Piso corresponding to the allowable operation amount (step S42), and a judgment on whether or not the traveling pilot pressure Pit output from the right traveling and the left traveling operation units 43 and 44 for the right traveling and the left traveling control valves 37, 38 exceeds an allowable traveling pilot pressure Pito corresponding to the allowable operation amount (step S43).

When the turning pilot pressure Pis is equal to or less than the allowable turning pilot pressure Piso and the traveling pilot pressure Pit is equal to or less than the allowable traveling pilot pressure Pie (NO in each of steps S42, S43), the controller 70 prevents an alarm (operation alarm) from being output regardless of the presence or absence of the detection object. This reduces the frequency of the output of the alarm to allow the alarm to keep a high alert effect.

On the other hand, when the turning pilot pressure Pis exceeds the allowable turning pilot pressure Piso (YES in step S42), or when the traveling pilot pressure Pit exceeds the allowable traveling pilot pressure Pie (YES in step S43), the controller 70 makes judgments on the presence or absence of a detection object and which area the detection object is present in, and determines the alarm that should be output based on the result of the judgment (steps S44 to S47).

When judging that the detection object is present in the stop area (YES in step S44), the controller 70 inputs to the alarm device 62 a first operation alarm command for making the alarm device 62 output a first operation alarm (step S46). Besides, when the detection object is not present in the stop area (NO in step S44) but present in the speed limitation area (YES in step S45), the controller 70 inputs to the alarm device 62 a second operation alarm command for making the alarm device 62 a second operation alarm (step S47). The stop area and the speed limitation area are respective areas in which the stop control and the speed limit control are set in accordance with the alarm target operation whose operation amount (target operation amount) is judged to exceed the allowable operation amount; for example, when the alarm target operation whose operation amount is judged to exceed the allowable operation amount is the backward traveling operation, the area AB1 and the area AB2 correspond to the stop area and the speed limitation area, respectively.

The second operation alarm is an alarm more restrained than the first operation alarm, specifically and preferably, with respect to at least one of a place, a sound volume, and a time. This enables an alarm according to the degree of risk to be provided to an operator or worker.

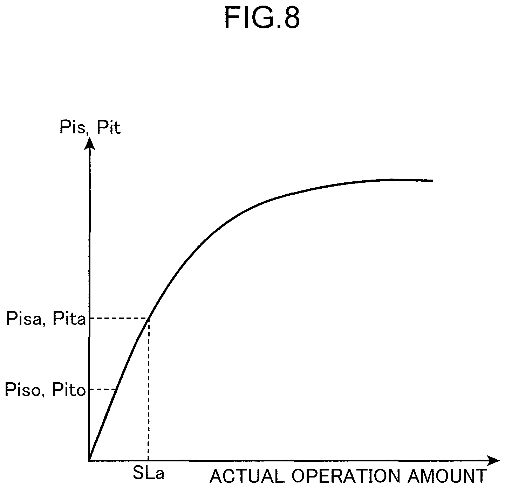

Each of the allowable pilot pressures Piso, Pito, that is, the pilot pressures corresponding to the allowable operation amount, although allowed to be arbitrarily set, has preferably a value less than the minimum value of the pilot pressure required for allowing the turning motion and the traveling motion to be started, respectively. For example, in the case where the turning pilot pressure Pis and the traveling pilot pressure Pit corresponding to the operation amount SL actually applied to the turning lever and the traveling lever, respectively, have characteristics as shown in FIG. 8 and the turning motion and the traveling motion are actually started only when the pilot pressures Pis, Pit exceed the pilot pressures Pisa, Pita corresponding to the operation amount SLa shown in FIG. 8, respectively, it is preferable to set the allowable pilot pressure Piso, Pits to respective values lower than the pilot pressure Pisa, Pita, respectively. This enables the alarm device 62 to be instructed to output the operation alarm at the point in time before the turning motion or the traveling motion is actually started by the application of the turning operation or the traveling operation to the operation device, thereby enabling the operation alarm to be output at a time for higher safety with reduced frequency of the operation alarm.

At the point in time when the alarm time count value CA has reached the target count value CAo, that is, when the target alarm time has elapsed after the start of the motion limitation control (NO in step S41), the alarm time count value CA is reset to 0 (step S48), and the output of the first or second operation alarm is stopped. Even though the operation alarm is thus stopped, the motion limitation control is continued to thereby allow high safety to be secured. In other words, the operation alarm is output in addition to the motion limitation control until the alarm time elapses after the start of the motion limitation control to thereby secure high safety, while the operation alarm is stopped after the alarm time has elapsed to thereby reduce the time during which the operation alarm is output to allow the alert effect of the operation alarm to be kept high.

The timing for stopping the output of the operation alarm, however, is not particularly restricted. The operation alarm may be continued until the presence of a detection target in the alarm area becomes undetected.

The controller 70 may be configured to make the alarm device 62 output a detection alarm more restrained than the operation alarm (the first and second operation alarms in the present embodiment) when the turning and traveling pilot pressures Pis, Pit are equal to or less than the allowable pilot pressures Piso, Pito, respectively, but it is judged that a detection is present in the alarm area. This limitation is also preferably with respect to at least one of the place, the sound volume and the time. For example, in the case of the alarm device 62 including the internal alarm 62A and the external alarm 62B as described above, the controller 70 may be configured to make both the internal and external alarms 62A, 62B output respective alarms to the inside and the outside of the cab 18, respectively, as the operation alarm, and to make the internal alarm 62A output an alarm only to the inside of the cab 18, as the detection alarm. This makes it possible to notify the presence of the detection object to only an occupant in the cab 18 at the stage where the operation amount of the turning operation or the traveling operation is equal to or less than the allowable operation amount and to alert an worker outside the cab 18 at an appropriate timing when the operation amount exceeds the allowable operation amount.

It may be possible that the same operation alarm is output constantly whether a detection target is present in the stop area or the speed limitation area. For example, when the target operation amount exceeds the allowable operation amount and the detection target is detected in the alarm area, the same operation alarm may be output whichever of the plurality of areas AR1, AR2, AB1, AB2, AL1, and AL2 the detection target is present in.

In addition, the present invention encompasses, for example, the following aspects.

### (1) Warning Target Operation

The alarm target operation according to the present invention has only to be selected from among the operations for moving the work machine, not necessarily restricted to the turning operation and the traveling operation. For example, depending on the type and size of the work machine, in place of or in addition to the turning operation and/or the traveling operation, another operation (for example, a working operation for moving the work device) may be set as the alarm target operation.

Meanwhile, in the case of a work machine including a lower traveling body and an upper turning body and allowing an operator to get on the upper turning body like the hydraulic excavator shown in FIG. 2, it is preferable that the alarm area includes at least an area backward of the upper turning body and the alarm target operation includes the turning operation and the traveling operation. This allows the back portion of the upper turning body, which portion is difficult for an operator on the upper turning body to visually recognize, to be effectively inhibited from contacting or approaching a detection object.

On the other hand, when the work device is supported by the upper turning body so as to protrude forward beyond the upper turning body like the work device 14 to be visually recognized by an operator easily, the exclusion of the working operation for moving the work device 14 from the alarm target operation allows the frequency of the output of the operation to be appropriately reduced with high safety secured.

The alarm target operation may be restricted to an approaching operation included in the operations to be applied to the operation device. The approaching operation is an operation in a direction of approaching a target part, which is a part to be moved by the approaching operation, to the detection target. For example, when a detection object is detected only in the area AB1 or AB2 backward of the upper turning body 12 among the plurality of areas shown in FIG. 2, the forward traveling operation for making the lower traveling body 10 travel forward may be excluded from the alarm target operation. The exclusion of the operation thus having a small degree of risk from the alarm target operation allows the frequency of the output of the operation alarm to be appropriately reduced with high safety secured.

### (2) Motion Limitation Control

Although the motion limitation control according to the embodiment is determined based on the area in which the detection object is present among a plurality of preset areas, the motion limitation control may be determined, instead thereof, based on the distance from a reference position set for the work machine to the detection object. For example, it may be possible that a forcible stop control is performed when the distance is equal to or less than a first distance and the speed limit control is performed when the distance is greater than the first distance and less than or equal to a second distance greater than the first distance. In also this case, it is preferable that at least one of the limitation target control and the alarm control is executed only for an operation in a direction of approaching the work machine to the detection target, that is, an operation in a direction of reducing the distance.

Although the alarm area shown in FIG. 2 (a plurality of areas of stopping and speed limiting areas) is set on the assumption that the hydraulic excavator is in the reference posture, the area may be changed according to the turning angle of the upper turning body 12 with respect to the lower traveling body 10. For example, in a posture where the front-rear direction of the upper turning body 12 is orthogonal to the traveling direction of the lower traveling body 10, there may be set an alarm area and/or a traveling motion limitation area backward, i.e., rightward or leftward in the traveling direction, of the upper turning body 12. Alternatively, traveling may be prohibited in a posture other than the reference posture.

According to the present invention, the motion limitation control is not essential. For example, only the alarm control may be performed as the safety control. This case requires no division of the alarm area into a plurality of areas. Alternatively, the alarm area may be divided into a first alarm area for outputting the first operation alarm and a second alarm area for outputting a second operation alarm more restrained than the first operation alarm.

### (3) Detection Part

The detector for constituting the detection part according to the present invention is not restricted to the imaging device. For example, may be used a simple distance sensor such as an infrared depth sensor or a millimeter wave radar. An imaging device, if used, may be either a monocular camera or an imaging device capable of generating three-dimensional information, for example, a stereo camera.

### (4) Operation Device

The operation device according to the present invention is not restricted to one composed of a remote-control valve like the turning operation unit 42 and the traveling operation units 43 and 44, that is, configured to output a pilot pressure corresponding to the operation applied thereto. The operation device may be, for example, an electric lever device that generates an electric signal (operation signal) corresponding to the magnitude of the applied operation (operation amount) and inputs the electric signal to the control part. In also this case, executing the operation alarm only when the operation amount exceeds a preset allowable operation amount reduces the frequency of the output of the operation alarm to enable the operation alarm to keep a high alert effect.

As has been described, according to the present invention is provided a safety device capable of issuing an alarm at a suitable frequency based on the presence or absence of a detection target around a work machine. Provided is a safety device for a work machine, comprising a detection part, an alarm device, an operation detector, and a control part. The work machine includes an operation device, which allows an operation for moving the work machine to be applied to the operation device, the operation including an alarm target operation. The detection part detects a detection object present around the work machine. The alarm device is capable of outputting an alarm. The operation detector detects a target operation amount that is a magnitude of the alarm target operation. The control part is configured to make the alarm device output an operation alarm only when the detection object detected by the detection part is present in an alarm area that is set around the work machine and the target operation amount exceeds a preset allowable operation amount, and configured to make outputting the operation alarm stopped regardless of a presence or absence of the detection object when the target operation amount is equal to or less than the allowable operation amount.

This device enables an alarm based on the detection of the detection object to be effectively performed at an appropriate timing. Specifically, the operation alarm is not output when the target operation amount that is the magnitude of the alarm target operation is equal to or less than the allowable operation amount even if the presence of the detection target in the alarm area is detected, and output only when the target operation amount exceeds the allowable operation amount, that is, only when the alarm target operation is actually performed by an operator. This makes it possible to make the operation alarm output effectively at an appropriate timing with the reduced frequency of the operation alarm.

The allowable operation amount, while allowed to be arbitrarily set, is preferably smaller than an operation amount by which a target part, which is a part to be moved by the alarm target operation in the work machine, is actually started to move. This makes it possible to make the alarm device output the operation alarm at a point in time before the target part is started to move by the application of the alarm target operation to the operation device, thereby enabling the operation alarm to be output at a timing for higher safety with the reduced frequency of the operation alarm.

It is preferable that the safety device further comprises a display device that displays an image that is visually recognizable by an operator, wherein the control part is configured to make the display device display a warning image indicating the presence of the detection object regardless of the target operation amount when the detection object is present in the alarm area. The display of the warning image enables an operator to recognize the presence of the detection target even when the operation alarm is not performed with the reduced frequency of the operation alarm, thereby allowing higher safety to be secured.

In the case where the work machine includes a lower traveling body capable of performing a traveling motion and an upper turning body capable of performing a turning motion with respect to the lower traveling body, the upper turning body allowing an operator to get on the upper turning body, it is preferable the alarm area includes at least an area backward of the upper turning body and the alarm target operation includes a traveling operation for making the lower traveling body perform the traveling motion and a turning operation for making the upper turning body perform the turning motion. This enables the back portion of the upper turning body, which portion is difficult for an operator on the upper turning body to visually recognize, and the detection object to be effectively inhibited from contact or approach each other.

In this aspect, when the work machine further includes a work device supported by the upper turning body so as to protrude forward beyond the upper turning body and a working operation for moving the work device is included in the operation to be applied to the operation device, the working operation may be excluded from the alarm target operation. Thus excluding the working operation for the work device protruding forward beyond the upper turning body to be easily visually recognized by an operator from the alarm target operation enables the frequency of the output of the operation alarm to be appropriately reduced with high safety secured.

The alarm target operation may be restricted to an operation in a direction of approaching a target part, which is a part to be moved by the operation, to the detection object from among operations applied to the operation device. In other words, the operation in a direction of separating the target part from the detection target among the operations to be applied to the operation device may be excluded from the alarm target operation. Excluding the operation thus having a small degree of risk from the alarm target operation enables the frequency of the output of the operation alarm to be appropriately reduced with high safety secured.

The control part may be configured to make the alarm device output a detection alarm more restrained than the operation alarm when the detection object is present in the alarm area and the target operation amount is equal to or less than the allowable operation amount. This allows an operator to recognize the presence of the detection target even when the target operation amount is equal to or less than the allowable operation amount. Moreover, the detection alarm, more restrained than the operation alarm, allows the alert effect by the operation alarm which is output only when the target operation amount is large to be kept high.

Preferably, the detection alarm is an alarm more restrained than the operation alarm with respect to at least one of a place, a sound volume, and a time. For example, in the case where the alarm device is capable of outputting an alarm to each of inside and outside of a operation room of the work machine, the control part may be configured to make the alarm device output an alarm to both the inside and the outside of the operation room as the operation alarm when the detection object is present in the alarm area and the target operation amount exceeds the allowable operation amount, and configured to make the alarm device output an alarm only to the inside of the operation room as the detection alarm when the detection object is present in the alarm area but the target operation amount is equal to or less than the allowable operation amount. This makes it possible to notify the presence of the detection object only to a occupant in the operation room in the stage where the target operation amount is equal to or less than the allowable operation amount and to alert a worker outside the operation room at an appropriate timing when the target operation amount exceeds the allowable operation amount.

The control part, preferably, is configured to perform a motion limitation control when an motion limitation target operation included in the alarm target motion is applied to the operation device. The motion limitation control is a control of limiting a limitation target motion, which is a motion of a target part that is moved by the motion limitation target operation, enabling the target portion to be more effectively inhibited from contacting or approaching the detection target.

The control part may be configured to make the operation alarm stopped at a point in time when a preset alarm time has elapsed after the motion limitation control is started. The continuation of the motion limitation control even though the operation alarm is thus stopped allows high safety to be secured. In other words, the output of the operation alarm in addition to the motion limitation control until a predetermined alarm time elapses after the motion limitation control is started allows the execution of the motion limitation control to be clearly notified, while the stop of the operation alarm after the alarm time has elapsed reduces the output time of the operation alarm to enable the high alert effect thereof to be kept.

As the specific combination of the motion limitation control and the alarm control, it may be possible that a stop area and a speed limitation area are set in the alarm area, and the control part is configured to forcibly stop the limitation target motion (as the motion limitation control) and make the alarm device output a first operation alarm when the motion limitation target operation is applied to the operation device with the detection object present in the stop area, and configured to limit a speed of the limitation target motion (as the motion limitation control) and make the alarm device output a second operation alarm that is more restrained than the first operation alarm as the operation alarm when the motion limitation target operation is applied to the operation device with the detection target present in the speed limitation area. This enables an operation alarm according to the degree of risk to be output for an operator.

In the case where the work machine is switchable between an operation lock state where an operation applied to the operation device is invalidated and an operation lock release state where the operation is validated, the control part may be configured to make the alarm device output the operation alarm only when the work machine is in the operation lock release state and configured to stop the operation alarm regardless of the target operation amount when the work machine is in the operation lock state. The suspension of the output of the operation alarm in the operation lock state, in which the alarm target operation is invalidated to disable the limitation target motion from being performed even when the alarm target operation is applied to the operation device, enables the frequency of the output of the operation alarm to be further reduced with high safety secured.

## Claims

1. A safety device for a work machine including an operation device which allows an operation for moving the work machine to be applied to the operation device, the safety device comprising:
a detection part that detects a detection object present around the work machine;
an alarm device capable of outputting an alarm;
an operation amount detector that detects a target operation amount that is a magnitude of an alarm target operation included in the operation; and
a control part, which is configured to make the alarm device output an operation alarm only when the detection object detected by the detection part is present in an alarm area that is set around the work machine and the target operation amount exceeds a preset allowable operation amount, and configured to make outputting the operation alarm stopped regardless of a presence or absence of the detection object when the target operation amount is equal to or less than the allowable operation amount.

2. The safety device of the work machine according to claim 1, wherein the allowable operation amount is smaller than an operation amount by which a target part, which is a part to be moved by the alarm target operation in the work machine, is actually started to move.

3. The safety device for the work machine according to claim 1, further comprising a display device that displays an image visually recognizable by an operator, wherein the control part is configured to make the display device display a warning image indicating a presence of the detection object regardless of the target operation amount when the detection object is present in the alarm area.

4. The safety device for the work machine according to claim 1, wherein the work machine includes a lower traveling body capable of performing a traveling motion and an upper turning body capable of performing a turning motion with respect to the lower traveling body, the upper turning body allowing an operator to get on the upper turning body; the alarm area includes at least an area backward of the upper turning body; and the alarm target operation includes a traveling operation for making the lower traveling body perform the traveling motion and a turning operation for making the upper turning body perform the turning motion.

5. The safety device for the work machine according to claim 4, wherein the work machine further includes a work device supported by the upper turning body so as to protrude forward beyond the upper turning body and a working operation for moving the work device is included in the operation to be applied to the operation device, the working operation excluded from the alarm target operation.

6. The safety device for the work machine according to claim 1, wherein the alarm target operation is restricted to an operation in a direction of approaching a target part, which is a part to be moved by the operation, among operations to be applied to the operation device.

7. The safety device for the work machine according to claim 1, wherein the control part is configured to make the alarm device output a detection alarm more restrained than the operation alarm when the detection object is present in the alarm area and the target operation amount is equal to or less than the allowable operation amount.

8. The safety device for the work machine according to claim 7, wherein the detection alarm is an alarm that is more restrained than the operation alarm with respect to at least one of a place, a sound volume and a time.

9. The safety device for the work machine according to claim 8, wherein the alarm device is capable of outputting an alarm to each of inside and outside of a operation room of the work machine, and the control part is configured to make the alarm device output an alarm to both the inside and the outside of the operation room as the operation alarm when the detection object is present in the alarm area and the target operation amount exceeds the allowable operation amount, and configured to make the alarm device output an alarm only to the inside of the operation room as the detection alarm when the detection object is present in the alarm area but the target operation amount is equal to or less than the allowable operation amount.

10. The safety device for the work machine according to claim 1, wherein the control part is configured to perform a motion limitation control when a motion limitation target operation included in the alarm target operation is applied to the operation device, the motion limitation control being a control of limiting a limitation target motion that is a motion of a target part that is moved by the motion limitation target operation.

11. The safety device for the work machine according to claim 10, wherein the control part is configured to make the operation alarm stopped at a point in time when a preset alarm time has elapsed after the motion limitation control is started.

12. The safety device for the work machine according to claim 11, wherein a stop area and a speed limitation area are set in the alarm area, and the control part is configured to forcibly stop the limitation target motion and make the alarm device output a first operation alarm when the motion limitation target operation is applied to the operation device with the detection object present in the stop area, and configured to limit a speed of the limitation target motion and make the alarm device output a second operation alarm that is more restrained than the first operation alarm as the operation alarm when the motion limitation target operation is applied to the operation device with the detection target present in the speed limitation area.

13. The safety device for the work machine according to claim 1, wherein the work machine is switchable between an operation lock state where an operation applied to the operation device is invalidated and an operation lock release state where the operation is validated, and the control part is configured to make the alarm device output the operation alarm only when the work machine is in the operation lock release state and configured to stop the operation alarm regardless of the target operation amount when the work machine is in the operation lock state.
